(19) **Europäisches Patentamt European Patent Office Office européen des brevets**

(11) **EP 3 114 718 B1**

(12) **FASCICULE DE BREVET EUROPEEN**

(45) Date de publication et mention de la délivrance du brevet:
**10.10.2018 Bulletin 2018/41**

(21) Numéro de dépôt: **15706842.0**

(22) Date de dépôt: **02.03.2015**

(51) Int Cl.:
*H01M 4/134* (2010.01)  *H01M 4/38* (2006.01)
*H01M 4/66* (2006.01)  *H01M 4/86* (2006.01)
*H01M 4/90* (2006.01)  *H01M 12/08* (2006.01)
*H01M 12/06* (2006.01)

(86) Numéro de dépôt international:
**PCT/EP2015/054286**

(87) Numéro de publication internationale:
**WO 2015/132193 (11.09.2015 Gazette 2015/36)**

(54) **PROCÉDÉ DE FABRICATION D'UNE CELLULE ÉLECTROCHIMIQUE ÉLÉMENTAIRE À ÉLECTRODE À GAZ DU TYPE MÉTAL-GAZ ET CELLULE ASSOCIÉE**

VERFAHREN ZUR HERSTELLUNG EINER PRIMÄREN ELEKTROCHEMISCHEN ZELLE MIT GASELEKTRODE VOM TYP METAL-GAS UND DAMIT VERBUNDENE ZELLE

PROCESS OF MANNUFACTURING A PRIMARY ELECTROCHEMICAL CELL WITH GAS ELECTRODE OF TYPE METAL-GAS AND ASSOCIATED CELL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2014 FR 1451744**

(43) Date de publication de la demande:
**11.01.2017 Bulletin 2017/02**

(73) Titulaire: **Commissariat à l'Énergie Atomique et aux Énergies Alternatives**
**75015 Paris (FR)**

(72) Inventeurs:
• **TURIN, Guillaume**
  **F-59000 Lille (FR)**

• **AZAIS, Philippe**
  **38120 Saint Egreve (FR)**
• **BERTHE DE POMMERY, Yves**
  **54380 Dieulouard (FR)**
• **PICARD, Lionel**
  **F-38170 Seyssinet-Pariset (FR)**

(74) Mandataire: **Brevalex**
**95, rue d'Amsterdam**
**75378 Paris Cedex 8 (FR)**

(56) Documents cités:
EP-A1- 2 757 629    EP-A1- 2 824 755
EP-A1- 3 041 082    WO-A1-85/04287
AT-B- 268 408    DE-A1-102011 053 782
US-A- 4 209 575    US-A1- 2005 260 493

**Description**

**DOMAINE TECHNIQUE**

La présente invention se rapporte au domaine des cellules de stockage d'énergie électrique, et notamment au domaine des cellules électrochimiques élémentaires. De telles cellules sont destinées à être assemblées au sein de modules eux-mêmes assemblés entre eux pour former un système de stockage d'énergie, par exemple un pack batterie. Plus particulièrement, l'invention concerne le domaine des cellules électrochimiques comportant une électrode à gaz, et plus spécifiquement le domaine des cellules électrochimiques du type métal-gaz.

Elle trouve des applications dans de nombreux domaines de l'industrie, notamment pour des applications stationnaires ou embarquées, en particulier pour le domaine de l'alimentation électrique des véhicules de transport, terrestres, aériens et/ou nautiques, par exemple pour l'alimentation électrique des véhicules hybrides et/ou électriques pour lesquels un agencement d'un grand nombre de cellules de stockage d'énergie électrique est requis.

Parmi les cellules électrochimiques élémentaires, trois principaux types de géométrie d'architecture sont couramment utilisés. Ainsi, de façon classique et connue en soi, les cellules peuvent présenter une géométrie cylindrique, une géométrie prismatique ou une géométrie en sachet/empilement (appelée encore « pouch-cell » en anglais).

De façon préférentielle, l'invention s'applique à des cellules de stockage électrique de géométrie prismatique et/ou cylindrique, bien qu'elle puisse également être concernée par d'autres types de géométrie des cellules.

L'invention propose ainsi un procédé de fabrication d'une cellule électrochimique élémentaire à électrode à gaz du type métal-gaz, ainsi qu'une cellule électrochimique élémentaire obtenue à partir d'un tel procédé.

**ÉTAT DE LA TECHNIQUE ANTÉRIEURE**

Les accumulateurs sont des systèmes permettant de stocker de l'énergie électrique sous forme chimique. Ils sont basés sur un système électrochimique réversible, c'est-à-dire rechargeable. Cependant, toutes les propositions énoncées ci-après restent valables pour des systèmes primaires (non rechargeables), tels que par exemple aluminium-air ou zinc-air, sauf mention contraire.

Le système de stockage d'énergie est un assemblage de modules électrochimiques, eux-mêmes assemblages de cellules électrochimiques élémentaires qui constituent des accumulateurs. Au sein du système de stockage d'énergie, les cellules électrochimiques sont reliées et gérées par une électronique de contrôle, encore appelée électronique BMS pour « Battery Management System » en anglais, qui permet d'optimiser la charge et la décharge et de prolonger la durée de vie.

Les accumulateurs ou cellules contiennent des réactifs chimiques qui, une fois activés, permettent de fournir de l'électricité à la demande. Ces réactions électrochimiques sont activées au sein de la cellule électrochimique élémentaire, entre une électrode positive et une électrode négative baignant dans un électrolyte, lorsqu'une charge électrique est branchée aux bornes de la cellule. A titre d'exemple, la technologie Li-ion consiste à utiliser la circulation électrochimique de l'ion lithium dans deux matériaux et à des valeurs de potentiel différentes : l'électrode positive et l'électrode négative constituent les deux potentiels d'oxydoréduction, et la différence de potentiel crée la tension au sein de la batterie. En cours d'utilisation (l'accumulateur se décharge), l'électrode négative relâche le lithium sous forme ionique $Li^+$. Les ions $Li^+$ migrent alors vers l'électrode positive, via l'électrolyte conducteur ionique. Le passage de chaque ion $Li^+$ au sein de l'accumulateur est compensé par le passage d'un électron dans le circuit externe (courant circulant à partir des bornes de l'accumulateur), en sens inverse, créant ainsi le courant électrique permettant de faire fonctionner le dispositif associé à la batterie. Il y a alors du courant électrique jusqu'à ce qu'il n'y ait plus de lithium au sein de l'électrode négative : l'accumulateur est alors déchargé et son rechargement se fait selon le processus inverse.

Les cellules électrochimiques élémentaires du type Li-ion sont très répandues dans de nombreuses applications, principalement dans la téléphonie mobile et l'informatique nomade. Plusieurs formats ou géométries de cellules existent actuellement, et principalement les cellules de géométrie cylindrique (le coeur électrochimique est alors réalisé par enroulement d'une double électrode positive, d'un électrolyte et d'une double électrode négative superposés) et les cellules de géométrie prismatique (les électrodes et l'électrolyte du coeur électrochimique pouvant alors être bobinés, empilés ou repliés, par exemple en « Z »). Les demandes de brevet EP 1 650 819 A1 et EP 1049 189 A1 décrivent par exemple des cellules comportant un coeur électrochimique bobiné et semblables aux batteries Li-ion cylindriques dites du type 18650. Les demandes de brevet EP 2 378 595 A2 et EP 0 948 072 A1 décrivent encore des cellules du type Li-ion mais de géométrie prismatique. Le coeur électrochimiques des cellules de géométrie prismatique peut d'ailleurs être discontinu (appelé aussi séquencé ou « patterned » en anglais), voire empilé (ou encore « stacked » en anglais), voire encore replié (ou « folded » en anglais), par exemple en « Z ». De tels exemples de coeurs électrochimiques empilés ou repliés sont par exemple décrits dans les brevets US 8, 440, 356 B2 et US 6, 287, 721 B1 ou encore la demande de brevet US 2013/0000110 A1.

Par ailleurs, parmi les diverses possibilités existantes pour le choix des électrodes des cellules électrochimiques élémentaires, on connaît les cellules électrochimiques qui comportent une électrode à gaz, encore dénommées ci-après « cellules à électrode à gaz », et notamment les cellules dites du type métal-gaz, c'est-à-dire les cellules qui comportent au moins une électrode métallique à un pôle et au moins une électrode à gaz à l'autre pôle, séparées par un électrolyte. La présente invention est tout particulièrement concernée par ce type de cellule électrochimique élémentaire, et notamment par les cellules dites du type lithium-oxygène ou encore Li-air.

En effet, les études actuelles montrent l'intérêt de la technologie métal-gaz, et notamment Li-air, pour les cellules électrochimiques élémentaires, qui pourrait constituer un substitut à la technologie Li-ion.

Néanmoins, la technologie métal-gaz, et notamment Li-air, est différente dans son fonctionnement de la technologie Li-ion, et induit différentes contraintes propres, en particulier en termes d'architecture des cellules et, par extension, de fabrication, et notamment quant à la protection du lithium de l'électrolyte et la bonne circulation du gaz. En effet, l'optimisation de la circulation du gaz pour permettre une arrivée optimale du gaz aux électrodes à gaz est une problématique fondamentale pour permettre d'améliorer le rendement des batteries du type métal-gaz, en termes de cinétique de réaction, quelque soit l'application envisagée de ces batteries.

**EXPOSÉ DE L'INVENTION**

Il existe ainsi un besoin pour concevoir une nouvelle solution pour l'élaboration de cellules électrochimiques élémentaires du type métal-gaz, et notamment les cellules du type Li-air.

L'invention a pour but de remédier au moins partiellement aux besoins mentionnés ci-dessus et aux inconvénients relatifs aux réalisations de l'art antérieur.

L'invention vise notamment à proposer une solution pour la réalisation de cellules électrochimiques élémentaires du type métal-gaz, et notamment du type Li-air, qui soient bobinées, et de géométrie d'architecture cylindrique ou prismatique.

L'invention a ainsi pour objet, selon l'un de ses aspects, un procédé de fabrication d'une cellule électrochimique élémentaire à électrode à gaz selon la revendication 1.

Grâce à l'invention, il est possible de réaliser des cellules électrochimiques élémentaires du type métal-gaz, et en particulier du type Li-air, dont l'architecture et le principe d'obtention se rapprochent avantageusement de ceux des cellules électrochimiques élémentaires couramment fabriquées et utilisées, et notamment des cellules du type Li-ion, de sorte à permettre une adaptabilité et une transition rapides, aisées et peu coûteuses pour le passage éventuel d'une technologie à l'autre. Par ailleurs, l'invention peut permettre la conception de cellules électrochimiques élémentaires du type métal-gaz, et notamment Li-air, en assurant une bonne circulation du gaz pour des dimensions similaires à celles actuellement existantes pour les cellules électrochimiques élémentaires du type Li-ion.

Le procédé selon l'invention peut en outre comporter l'une ou plusieurs des caractéristiques suivantes prises isolément ou suivant toutes combinaisons techniques possibles.

La cellule électrochimique élémentaire est du type lithium-air, aluminium-air ou zinc-air.

Les espaces de circulation du gaz peuvent être formés par des séparations générées entre les enroulements du coeur électrochimique de la cellule.

Le procédé comporte l'étape de fabrication d'une cellule électrochimique élémentaire de géométrie d'architecture cylindrique ou prismatique avec réalisation d'un coeur électrochimique par bobinage.

Le coeur électrochimique peut être réalisé par superposition successive des couches suivantes :

- une couche d'électrode négative métallique, constituée notamment d'une feuille de cuivre et d'une feuille de lithium métal recouvert d'une membrane protectrice,
- une couche d'électrolyte, constituée notamment d'une couche de séparateur imbibé d'électrolyte,
- une couche d'électrode positive à gaz, constituée notamment d'une grille de nickel recouverte d'une couche du type GDL favorisant la diffusion du gaz de manière homogène à la surface de l'électrode positive.

Le coeur électrochimique peut être réalisé par superposition successive de part et d'autre d'une couche d'électrode négative métallique, constituée notamment d'une feuille de cuivre et d'une feuille de lithium métal recouvert d'une membrane protectrice, d'un ensemble formé par une couche d'électrolyte, constituée notamment d'une couche de séparateur imbibé d'électrolyte, et une couche d'électrode positive à gaz, constituée notamment d'une grille de nickel recouverte d'une couche du type GDL favorisant la diffusion du gaz de manière homogène à la surface de l'électrode positive.

Le coeur électrochimique peut être réalisé par superposition successive de part et d'autre d'une couche d'électrode positive à gaz, constituée notamment d'une grille de nickel recouverte d'une couche du type GDL favorisant la diffusion du gaz de manière homogène à la surface de l'électrode positive, d'un ensemble formé par une couche d'électrolyte, constituée notamment d'une couche de séparateur imbibé d'électrolyte, et une couche d'électrode négative métallique, constituée notamment d'une feuille de cuivre et d'une feuille de lithium métal recouvert d'une membrane protectrice.

Le procédé peut en outre comporter l'étape consistant à disposer des moyens de séparation sur la surface d'au moins une couche d'électrode positive ou négative, notamment une couche d'électrode à gaz, lors de l'enroulement des couches pour former le coeur électrochimique bobiné, de sorte à former des espaces de circulation du gaz pour l'acheminement du gaz vers la ou les couches d'électrode à gaz.

Le procédé peut comporter l'étape consistant à disposer en outre, en surface d'une ou plusieurs couches d'électrode à gaz, au moins une couche souple de diffusion du gaz pour former des espaces de circulation du gaz.

Ladite au moins une couche souple de diffusion du gaz peut être une mousse souple poreuse.

Ladite au moins une couche souple de diffusion du gaz peut être une plaque souple de diffusion du gaz, notamment une plaque monopolaire ou une plaque bipolaire.

Les moyens de séparation peuvent être réalisés dans un matériau isolant.

Les moyens de séparation peuvent en variante être réalisés dans un matériau conducteur.

Le procédé peut comporter l'étape consistant à disposer des fils, notamment de métal, conducteurs en surface de chacune des couches d'électrode positive et négative, et à les relier entre eux (respectivement les fils en surface des couches d'électrode positive entre eux et les fils en surface des couches d'électrode négative entre eux), notamment par soudure.

Le bobinage du coeur électrochimique peut être réalisé par enroulement du coeur électrochimique autour d'un élément d'enroulage, notamment un mandrin.

La cellule peut être de géométrie d'architecture cylindrique, et le rayon p de l'élément d'enroulage peut être obtenu par la relation suivante :

$$\rho = [D - (e + f) \times (n-1)] / 2,$$

où :

D est le diamètre extérieur de la cellule,
e est l'épaisseur du coeur électrochimique,
f est l'épaisseur de l'espace entre deux enroulements, et
n est le nombre de demi-enroulements du coeur électrochimique.

Les couches du coeur électrochimique, après dimensionnement de celles-ci, peuvent être découpées, puis fixées à l'élément d'enroulage, puis enroulées autour de l'élément d'enroulage pour former le coeur électrochimique bobiné de la cellule.

La cellule peut être de géométrie d'architecture prismatique, et peut être séquencée par la présence d'un coeur électrochimique formé par une succession de motifs de coeurs électrochimiques répartis sur une bande de collecteur de courant.

En outre, l'invention a encore pour objet, selon un autre de ses aspects, une cellule électrochimique élémentaire à électrode à gaz selon la revendication 8.

La cellule peut être du type lithium-air.

La cellule est de géométrie d'architecture cylindrique ou prismatique, comportant un coeur électrochimique bobiné.

La cellule peut comporter un boîtier, comportant un tube de section cylindrique ou prismatique, un couvercle inférieur et un couvercle supérieur, chaque couvercle constituant une borne reliée à un pôle électrique du coeur électrochimique de la cellule.

Les couvercles inférieur et supérieur peuvent comporter une ouverture pour permettre la circulation du gaz.

La cellule peut comporter des moyens de séparation entre la partie interne du tube du boîtier et le coeur électrochimique de la cellule pour former des espaces de circulation du gaz.

Les caractéristiques énoncées dans la présente description peuvent être prises isolément ou selon toutes combinaisons techniquement possibles avec d'autres caractéristiques.

## BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :

- les figures 1A et 1B représentent, en perspective et respectivement en vue non assemblée et en vue assemblée, un exemple de cellule électrochimique élémentaire du type métal-gaz de géométrie d'architecture cylindrique et présentant un coeur électrochimique bobiné, la cellule étant obtenue par le procédé selon l'invention,
- les figures 2A, 2B et 2C illustrent schématiquement les diverses possibilités de superposition des couches d'une cellule électrochimique élémentaire obtenue par le procédé selon l'invention,
- la figure 3A représente, en coupe, le bobinage d'une cellule électrochimique élémentaire de géométrie d'architecture cylindrique avec présence d'entretoises pour former des espaces de circulation du gaz,
- la figure 3B représente, en perspective, un exemple d'une entretoise utilisée pour former des espaces de circulation du gaz dans une cellule électrochimique élémentaire,
- les figures 4A, 4B et 4C illustrent la possibilité de disposer, sur une couche d'électrode à gaz ou entre deux couches d'électrodes à gaz du coeur électrochimique d'une cellule électrochimique élémentaire selon l'invention, une couche souple de diffusion du gaz destinée à former un espace de circulation du gaz, respectivement pour les possibilités de superposition des couches d'une cellule électrochimique élémentaire des figures 2A, 2B et 2C,
- la figure 5 illustre, en coupe, la possibilité de disposer en surface d'une électrode à gaz d'une cellule électrochimique élémentaire, un élément de mise en forme lors de l'enroulement du coeur électrochimique bobiné,

- la figure 6 illustre, en coupe, l'enroulement du coeur électrochimique d'une cellule électrochimique élémentaire autour d'un élément d'enroulage,

- la figure 7 représente, de façon schématique, en coupe, les différentes couches supérieure, intermédiaires et inférieure d'un enroulement du coeur électrochimique d'une cellule électrochimique élémentaire selon l'invention, ainsi que le début de l'enroulement suivant, avec présence d'un espace de circulation du gaz entre les enroulements,

- les figures 8A et 8B illustrent, en coupe, deux variantes de réalisation de moyens de séparation entre le coeur électrochimique de la cellule électrochimique élémentaire et le corps du boîtier de la cellule,

- les figures 9A, 9B et 9C représentent, en perspective, un exemple de cellule électrochimique élémentaire comportant un boîtier muni d'un couvercle supérieur pourvu d'un embout à gaz hermétique,

- les figures 10A et 10B représentent, en perspective et respectivement en vue partielle et non assemblée, un exemple d'une cellule électrochimique élémentaire de géométrie d'architecture prismatique avec un coeur électrochimique bobiné, obtenue par le procédé de fabrication selon l'invention, et

- la figure 11 représente, en coupe, un exemple de cellule électrochimique élémentaire de géométrie d'architecture prismatique, séquencée par la présence de plusieurs coeurs électrochimiques sur un collecteur de courant.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

Dans tous les exemples décrits ci-après, les cellules de stockage d'énergie électrique 1 sont des cellules électrochimiques élémentaires 1, destinées à former des générateurs électrochimiques. De plus, chaque cellule électrochimique élémentaire 1 comporte un coeur électrochimique, comportant au moins une électrode négative, au moins une électrode positive et au moins un électrolyte entre une électrode négative et une électrode positive, de sorte à permettre la réalisation d'une réaction électrochimique.

En outre, les cellules électrochimiques élémentaires 1 présentées ici sont de géométrie prismatique ou cylindrique. Elles sont en particulier destinées à être intégrées dans un module électrochimique d'assemblage d'un système de stockage d'énergie.

On présente ci-après différentes variantes du procédé de fabrication d'une cellule électrochimique élémentaire 1 du type métal-gaz conforme à l'invention, et notamment d'une cellule du type Li-air.

Fabrication par bobinage cylindrique

On décrit ci-après la réalisation d'une cellule électrochimique élémentaire 1 du type métal-gaz, de géométrie d'architecture cylindrique avec un coeur électrochimique bobiné.

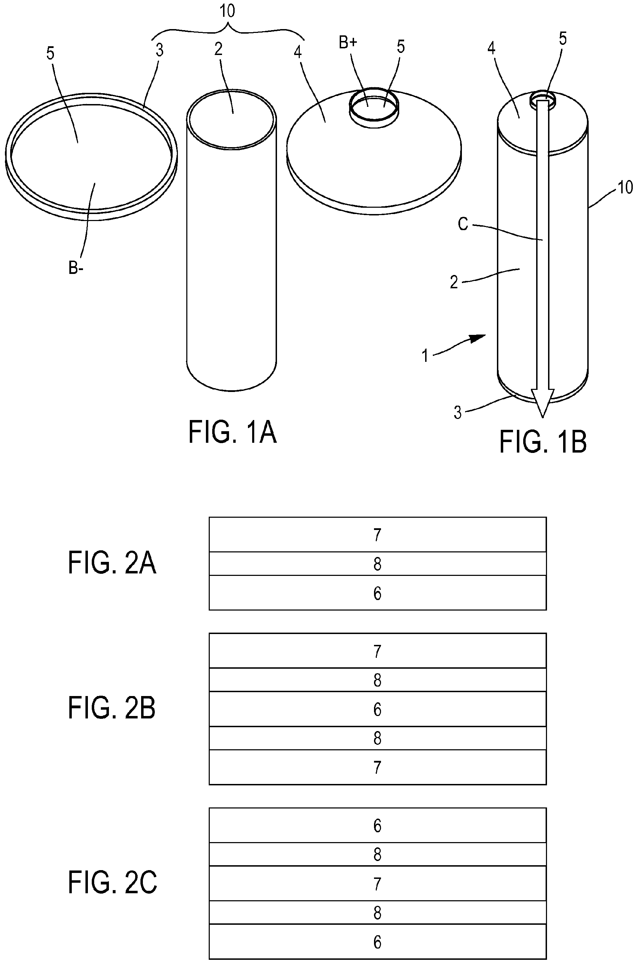

On a ainsi représenté sur les figures 1A et 1B, en perspective et respectivement en vue non assemblée et en vue assemblée, un exemple d'une telle cellule 1 de géométrie cylindrique avec un coeur électrochimique bobiné, obtenue par le procédé selon l'invention.

La cellule 1 comporte un boîtier 10, formé lui-même par un tube 2 de section cylindrique, un couvercle inférieur 3 et un couvercle supérieur 4, représentés de façon séparée sur la figure 1A. Chaque couvercle constitue une borne reliée à un pôle électrique du coeur électrochimique de la cellule 1. Par exemple, le couvercle inférieur 3 peut constituer une borne négative B- et le couvercle supérieur 4 peut constituer une borne positive B+.

La figure 1B représente la cellule 1 de façon assemblée, les couvercles inférieur 3 et supérieur 4 étant placés aux extrémités du tube 2 de section cylindrique. Comme le représente la flèche C sur cette figure 1B, la circulation du gaz au sein de la cellule 1 se fait dans le sens longitudinal du coeur électrochimique situé à l'intérieur de la cellule 1, en passant par les couvercles inférieur 3 et supérieur 4. A ce titre, les couvercles inférieur 3 et supérieur 4 peuvent comporter une ouverture 5 suffisante pour permettre la circulation du gaz.

Ainsi, selon la configuration des bornes B+, B- des cellules 1, il peut être possible d'empiler plusieurs cellules 1 et de les connecter en série, le gaz pouvant alors circuler en traversant les cellules 1, comme représenté sur la figure 1B. Avantageusement, la circulation du gaz peut se faire de façon passive (par exemple par un vent de vitesse ou sous pression) ou active (par exemple par utilisation d'un gaz sous flux).

La présente invention pouvant avantageusement permettre d'adapter la technologie métal-gaz, et notamment Li-air, aux principes de fabrication des cellules électrochimiques élémentaires du type Li-ion déjà connues, il est ici considéré l'exemple d'une cellule électrochimique élémentaire 1 du type Li-air de dimensions identiques aux cellules électrochimiques du type 18650 actuelles. Aussi, les différentes étapes du procédé selon l'invention non développées ici peuvent avantageusement être rapprochées des procédés de réalisation des cellules Li-ion cylindriques bobinées déjà connues.

Pour la fabrication de la cellule 1 cylindrique au coeur électrochimique bobiné, on prend en compte le fait que le coeur électrochimique d'une cellule cylindrique est principalement constitué de couches successives d'électrode métallique, d'électrolyte et d'électrode à gaz. Ainsi, différentes configurations de superposition des couches sont possibles.

Les figures 2A, 2B et 2C illustrent schématiquement les possibilités de superposition des couches de la cellule 1.

Tout d'abord, en référence à la figure 2A, il est possible de réaliser le coeur électrochimique de la cellule 1 par superposition successive d'une couche d'électrode négative 6 métallique constituée d'une feuille de cuivre et d'une feuille de lithium métal recouvert d'une membrane protectrice, d'une couche d'électrolyte 8 constituée d'une couche de séparateur imbibé d'électrolyte, et d'une couche d'électrode positive 7 à gaz constituée d'une grille de nickel recouverte d'une couche fine du type GDL (pour « Gaz Diffusion Layer» en anglais) favorisant la diffusion du gaz de manière homogène à la surface de l'électrode positive 7 et épousant la forme de la grille de nickel.

Par ailleurs, en référence à la figure 2B, il est encore possible de réaliser le coeur électrochimique de la cellule 1 de la manière suivante. On superpose successivement de part et d'autre de la couche d'électrode négative 6 métallique, une couche de séparateur imbibée d'électrolyte 8 et une couche d'électrode positive 7, les couches d'électrode négative 6 et d'électrode positive 7 étant de même composition que celles décrites en référence à la figure 2A. La feuille de cuivre joue alors un rôle de plan de symétrie de l'empilement de couches, les couches extérieures étant constituées par les grilles de nickel recouvertes d'une couche du type GDL.

En outre, en référence à la figure 2C, il est également possible d'avoir une disposition inverse de celle prévue en référence à la figure 2B, à savoir que la couche d'électrode positive 7 à gaz sur la figure 2C remplace la couche d'électrode négative 6 métallique de la figure 2B, et que deux couches d'électrode négative 6 sur la figure 2C remplacent les deux couches d'électrode positive 7 de la figure 2B.

Les couches d'électrode positive 7 et négative 6 sur la figure 2C sont donc les mêmes que pour la figure 2B. Toutefois, la couche d'électrode positive 7 peut correspondre à un empilement de deux sous-couches d'électrode positive 7 (non représentées) séparées par une couche d'un élément diffuseur de gaz, permettant la diffusion du gaz, cet élément étant alors plan de symétrie de l'empilement global des couches, les couches extérieures étant constituées par les couches de cuivre.

Il est à noter que, dans une variante de réalisation de l'empilement des différentes couches du coeur électrochimique de la cellule 1, la couche d'électrolyte 8 peut comporter de part et d'autre un matériau isolant assurant l'étanchéité de la couche d'électrolyte 8. Plus particulièrement, le séparateur, préalablement imbibé d'électrolyte, peut présenter de part et d'autre sur sa tranche un cordon isolant assurant l'étanchéité de l'électrolyte, suffisamment souple pour encaisser les contraintes de cisaillement lors de l'enroulement du coeur électrochimique et neutre chimiquement. Ce cordon peut avantageusement être réalisé en un matériau élastomère. Ainsi, une fois le coeur électrochimique enroulé, l'électrolyte peut être confiné dans le séparateur, sans risque de fuite par les couvercles inférieur 3 et supérieur 2 du boîtier 10.

On va maintenant décrire les possibilités existantes pour la formation d'espaces E de circulation du gaz pour l'acheminement du gaz vers la ou les électrodes positives 7 à gaz, conformément au procédé de fabrication selon l'invention.

Les espaces E de circulation du gaz peuvent avantageusement être formés par une séparation des couches du coeur électrochimique. Plusieurs possibilités sont ainsi envisageables pour laisser un espace E de circulation du gaz en surface d'une électrode positive 7.

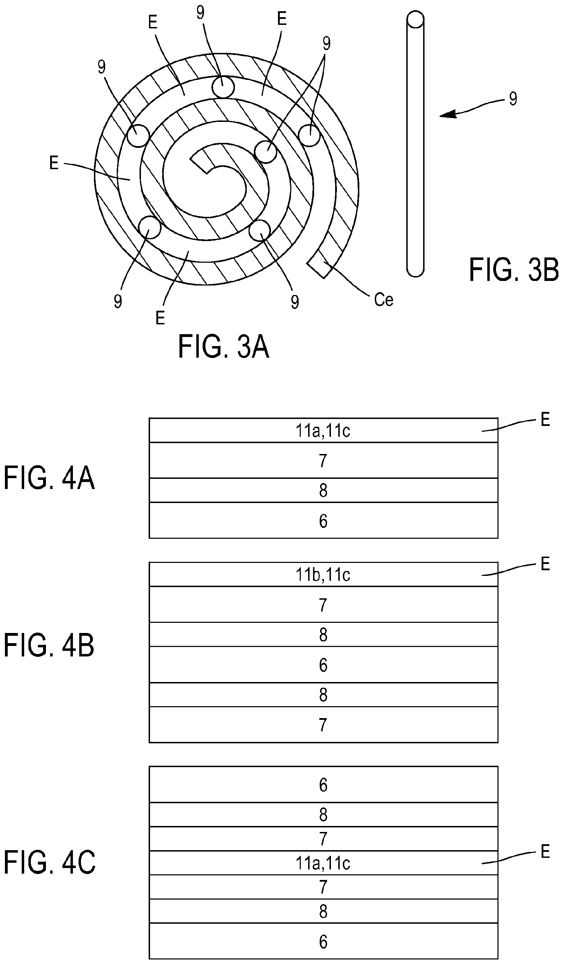

Tout d'abord, on a illustré sur les figures 3A et 3B la possibilité de disposer des entretoises 9 dans le bobinage du coeur électrochimique Ce de la cellule 1. Plus particulièrement, la figure 3A représente, en coupe, le bobinage de la cellule cylindrique 1 avec présence des entretoises 9, et la figure 3B représente, en perspective, un exemple d'une telle entretoise 9 utilisée pour former des espaces E de circulation du gaz.

Le procédé de fabrication selon l'invention peut ainsi comporter l'étape consistant à disposer en surface d'une ou plusieurs couches d'électrode à gaz, en particulier les couches d'électrode positive 7 dans l'exemple décrit ici, des entretoises 9 espacées les unes des autres pour ménager des espaces E de circulation du gaz, comme on peut le voir sur la figure 3A.

Les entretoises 9 peuvent se présenter sous la forme de baguettes cylindriques, creuses, poreuses ou pleines, comme on peut le voir sur la figure 3B.

Les entretoises 9 peuvent être disposées en surface de la ou des couches d'électrode à gaz préférentiellement de façon régulière, et/ou préférentiellement de façon sensiblement parallèle entre elles, et/ou préférentiellement dans le sens de la hauteur de la cellule 1 de géométrie cylindrique à obtenir.

Les entretoises 9 peuvent présenter une section la plus faible possible mais doivent néanmoins pouvoir laisser un espace E suffisant pour faire circuler le gaz une fois le coeur électrochimique Ce enroulé.

De préférence, le nombre d'entretoises 9 utilisées est également limité de façon à ne pas obstruer la circulation longitudinale du gaz dans la cellule 1 une fois celle-ci enroulée.

Par ailleurs, on a illustré schématiquement sur les figures 4A, 4B et 4C la possibilité de disposer, sur une couche d'électrode à gaz ou entre deux couches d'électrodes à gaz, en particulier les couches d'électrode positive 7 dans l'exemple décrit ici, une couche souple de diffusion du gaz 11a, 11b ou 11c destinée à former un espace E de circulation du gaz, respectivement pour les possibilités de superposition des couches d'une cellule électrochimique élémentaire des figures 2A, 2B et 2C.

Plus précisément, la figure 4A illustre la possibilité de disposer une couche souple de diffusion du gaz 11a ou 11c sur la couche d'électrode positive 7 de la configuration de la figure 2A.

La figure 4B illustre la possibilité de disposer une couche souple de diffusion du gaz 11b ou 11c sur une des couches d'électrode positive 7 de la configuration de la figure 2B.

La figure 4C illustre la possibilité de disposer une couche souple de diffusion du gaz 11a ou 11c entre les deux couches d'électrode positive 7 de la configuration de la figure 2C (la couche d'électrode positive 7 de la figure 2C a été scindée en deux couches d'électrode positive 7).

Pour les trois exemples des figures 4A, 4B et 4C, la couche souple de diffusion du gaz peut être une mousse souple poreuse 11c, présentant notamment une porosité suffisante pour être quasiment parfaitement perméable au gaz et favoriser ainsi sa circulation. L'épaisseur de la mousse souple poreuse 11c est préférentiellement un bon compromis entre le gain de place (faible épaisseur) et l'assurance d'une bonne circulation du gaz, une fois la cellule 1 bobinée.

Par ailleurs, pour les trois exemples des figures 4A, 4B et 4C, la couche souple de diffusion du gaz peut être une plaque souple de diffusion du gaz 11a ou 11b, et notamment une plaque monopolaire 11a pour les exemples des figures 4A et 4C ou une plaque bipolaire 11b pour l'exemple de la figure 4B.

L'épaisseur de la plaque monopolaire 11a ou bipolaire 11b est préférentiellement la plus faible possible mais doit assurer suffisamment la circulation du gaz une fois la cellule 1 bobinée.

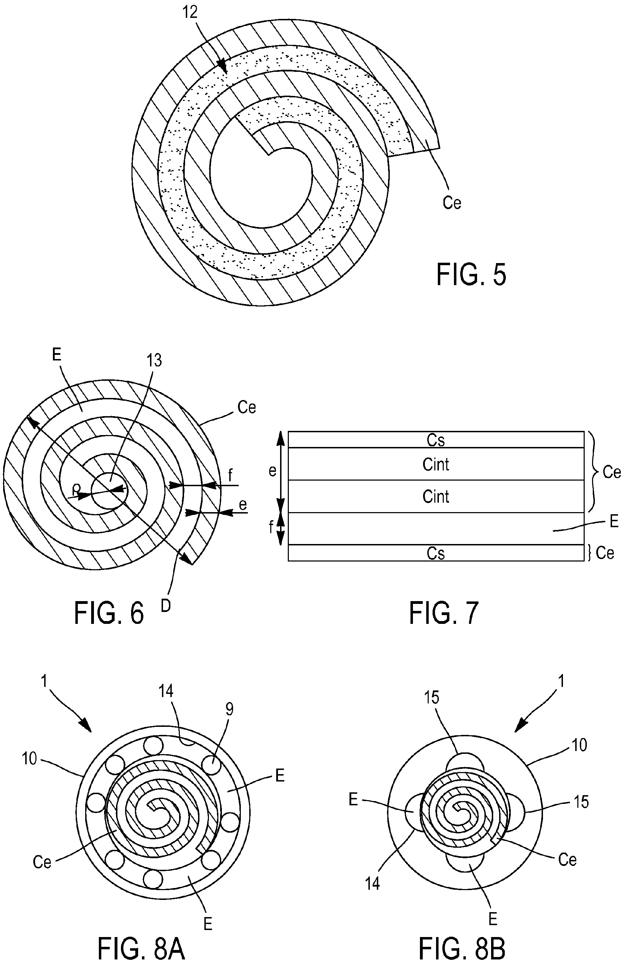

On a par ailleurs illustré sur la figure 5, en coupe, la possibilité de disposer en surface d'une électrode à gaz 7, un élément de mise en forme 12 lors de l'enroulement du coeur électrochimique Ce.

L'élément de mise en forme 12 peut être un élément de séparation quelconque, et correspondre, entre autres, à une entretoise, une préforme, une plaque monopolaire ou bipolaire, un élément d'épaisseur.

Ainsi, à la surface d'au moins une couche d'électrode à gaz, notamment une couche d'électrode positive 7, du coeur électrochimique Ce, on intercale une couche de séparation sous la forme de l'élément de mise en forme 12, la couche d'électrode à gaz pouvant notamment être une couche d'électrode positive 7 supérieure d'un coeur électrochimique Ce bobiné tel que décrit en référence aux figures 2A et 2B.

Une fois le coeur électrochimique Ce muni de l'élément de mise en forme 12 enroulés, et si les matériaux d'électrode sont préférentiellement suffisamment déformés plastiquement pour que le coeur électrochimique Ce se maintienne en forme, on retire l'élément de mise en forme 12 pour laisser un espace E de circulation du gaz. Après retrait de l'élément de mise en forme 12, on obtient une configuration du coeur électrochimique Ce telle que représentée sur la figure 6.

Les différentes configurations décrites en référence aux figures 3A, 3B, 4A, 4B, 4C et 5 peuvent, le cas échéant, être combinées entre elles.

Par ailleurs, de façon préférentielle, le ou les espaces E de circulation du gaz, une fois l'ensemble enroulé, ont une épaisseur entre chaque spire du coeur électrochimique Ce approximativement de l'ordre du millimètre pour ne pas induire une épaisseur de cellule 1 trop importante ou une compacité trop faible tout en restant efficace.

En outre, pour une configuration du coeur électrochimique Ce telle que décrite en référence à la figure 2A, les moyens de séparation 9, 11a, 11c ou 12 sont préférentiellement réalisés dans un matériau isolant afin d'isoler électriquement les couches d'électrode positive 7 et négative 6. En revanche, pour les configurations du coeur électrochimique Ce telles que décrites en référence aux figures 2B et 2C, les moyens de séparation 9, 11b, 11c ou 12 sont préférentiellement réalisés dans un matériau conducteur électriquement afin de connecter électriquement entre elles les couches d'électrode de même pôle ainsi en contact une fois l'ensemble enroulé.

En ce qui concerne la connectique des couches d'électrode positive 7 ou négative 6, le procédé comporte encore l'étape consistant à disposer régulièrement et à souder des fils de métal conducteur en surface de chacune des couches d'électrode. Les fils de métal situés sur la ou les couches d'électrode positive 7 dépassent à une des extrémités du coeur électrochimique Ce, et ceux situés sur la ou les couches d'électrode négative 6 dépassent à l'autre des extrémités du coeur électrochimique Ce. Il est alors souhaitable de veiller à laisser suffisamment dépasser les fils de métal des couches d'électrode afin de pouvoir facilement souder entre eux ceux reliés à un même pôle, de façon à pouvoir brancher la borne dudit pôle correspondant dans une étape ultérieure.

Le diamètre des fils de métal est avantageusement inférieur à l'épaisseur d'un moyen de séparation 9, 11a, 11b, 11c ou 12, et il est également souhaitable de veiller à ce qu'il ait un nombre limité de fils de métal afin de ne pas obstruer la circulation longitudinale du gaz dans la cellule 1 une fois celle-ci enroulée et les fils de métal soudés entre eux. De façon préférentielle, les fils de métal sont situés de façon à se retrouver sur un axe transversal au bobineau une fois le coeur électrochimique Ce enroulé.

Le procédé de fabrication selon l'invention peut de plus comporter l'étape consistant à enrouler le coeur électrochimique Ce de la cellule 1 autour d'un élément d'enroulage 13, notamment un mandrin 13, tel que représenté sur la figure 6.

La figure 6 illustre en effet l'enroulement du coeur électrochimique Ce de la cellule 1 autour du mandrin 13, et illustre également certains paramètres de dimensionnement du coeur électrochimique Ce.

Le coeur électrochimique Ce de la cellule 1, constitué de l'enroulement de couches tel que décrit précédemment, est préférentiellement enroulé autour d'un mandrin 13. De façon préférentielle, chaque couche du coeur électrochimique Ce présente une longueur d'enroulement différente, directement dépendante du nombre d'enroulements et de l'épaisseur du coeur électrochimique Ce, ainsi que de l'espace E pour permettre la circulation du gaz entre deux enroulements. De plus, du diamètre du mandrin 13 et de l'épaisseur entre deux demi-spires va dépendre la dimension totale de la cellule 1 enroulée. Il est ainsi souhaitable de veiller à obtenir un compromis pour le diamètre du mandrin 13 entre dimensions raisonnables et tenue mécanique, ainsi que pour tenir compte du rayon de courbure minimal acceptable par les matériaux constituant le coeur électrochimique Ce.

Ainsi, en faisant l'approximation qu'un demi-enroulement i a un rayon de courbure constant sur un angle $\pi$, on peut dimensionner le rayon p du mandrin 13 intérieur en fonction du diamètre extérieur D de la cellule 1, de l'épaisseur e du coeur électrochimique Ce, de l'épaisseur f d'espace E entre deux enroulements (par exemple f=0 dans la configuration de la figure 2C) et du nombre n de demi-enroulements, selon la relation suivante :

$$\rho = \frac{[D - (e + f) * (n - 1)]}{2}$$

Il est également possible de calculer le nombre n de demi-enroulements en fonction du diamètre D extérieur de la cellule 1, de l'épaisseur e du coeur électrochimique Ce, de l'épaisseur f d'espace E entre deux enroulements et du rayon p du mandrin 13 extérieur, selon la relation suivante :

$$n = 1 + \frac{(D - 2) * \rho}{e + f}$$

Avec l'approximation qu'un demi-enroulement i a un rayon de courbure constant sur un angle $\pi$, on obtient alors pour la longueur totale l de la couche intérieure constituée de n demi-enroulements de rayon $r_i$, la relation suivante :

$$l = \pi * [2 * \rho + \sum_{i=0}^{n} (e + f) * i]$$

De même, pour la longueur totale L de la couche extérieure constituée de n demi-enroulements de rayon $R_i$, on a la relation suivante :

$$L = \pi * [2 * (\rho + e) + \sum_{i=0}^{n} (e + f) * i]$$

Soit de manière récurrente :

$$\begin{cases} l = l + \pi * [\rho + (e + f) * i] \\ L = l + 2 * e * \pi \\ i = i + 1 \end{cases}$$

On peut de même calculer les longueurs $\lambda_j$ des couches intermédiaires $C_{int}$ situées entre la couche supérieure $C_s$ et la couche inférieure $C_i$ d'un enroulement du coeur électrochimique Ce en fonction de la longueur l de la couche inférieure $C_i$ déroulée et de leur distance j par rapport à ladite couche inférieure $C_i$ par la relation suivante :

$$\lambda_j = l + 2 * \pi * j.$$

On a ainsi schématisé sur la figure 7, en coupe, les différentes couches supérieure $C_s$, intermédiaires $C_{int}$ et inférieure $C_i$ d'un enroulement du coeur électrochimique Ce, ainsi que le début de l'enroulement suivant, avec présence d'un espace E de circulation du gaz entre les enroulements.

Il est à noter que la couche supérieure $C_s$ peut être une couche d'électrode positive 7 ou une couche d'électrode négative 6. De même, la couche inférieure $C_i$ peut être une couche d'électrode positive 7 ou une couche d'électrode négative 6. Les couches intermédiaires $C_{int}$ peuvent comporter au moins une couche d'électrode positive 7 et/ou au moins une couche d'électrode négative 6 et/ou au moins une couche d'électrolyte 8. Un enroulement du coeur électrochimique Ce comportant une couche supérieure $C_s$, une couche inférieure $C_i$ et une ou plusieurs couches intermédiaires $C_{int}$ peut être tel que ceux décrits par exemple en référence aux figures 2A, 2B et 2C.

Une fois la longueur de chaque couche du coeur électrochimique Ce dimensionnée et superposée, les couches du coeur électrochimiques Ce peuvent être découpées, puis peuvent être fixées à l'élément d'enroulage ou mandrin 13, préférentiellement par collage, en s'assurant qu'il n'y a aucun court-circuit. Ensuite, les couches du coeur électrochimique Ce peuvent être enroulées autour du mandrin 13, le mandrin 13 pouvant être permanent, auquel cas sa densité est avantageusement la plus faible possible, ou retiré après cette opération. Si le mandrin 13 est retiré, l'espace E laissé par son emprunte peut permettre d'absorber les variations de volume en fonctionnement normal, et peut également avantageusement être occupé par un ou plusieurs systèmes de régulation thermique et/ou un ou plusieurs capteurs. Une fois la cellule 1 enroulée, il est également souhaitable de fixer l'autre extrémité sur la spire extérieure, de préférence par collage, en veillant à ce qu'il n'y ait aucun court-circuit.

Par ailleurs, une fois la cellule électrochimique élémentaire 1 pourvu de son coeur électrochimique Ce enroulé, le procédé de fabrication selon l'invention comporte l'étape de fixation, notamment par soudure, à chacune des extrémités de la cellule 1, des fils de métal reliant les électrodes d'un même pôle entre elles, et l'étape d'insertion du coeur électrochimique Ce dans son emballage ou boîtier 10.

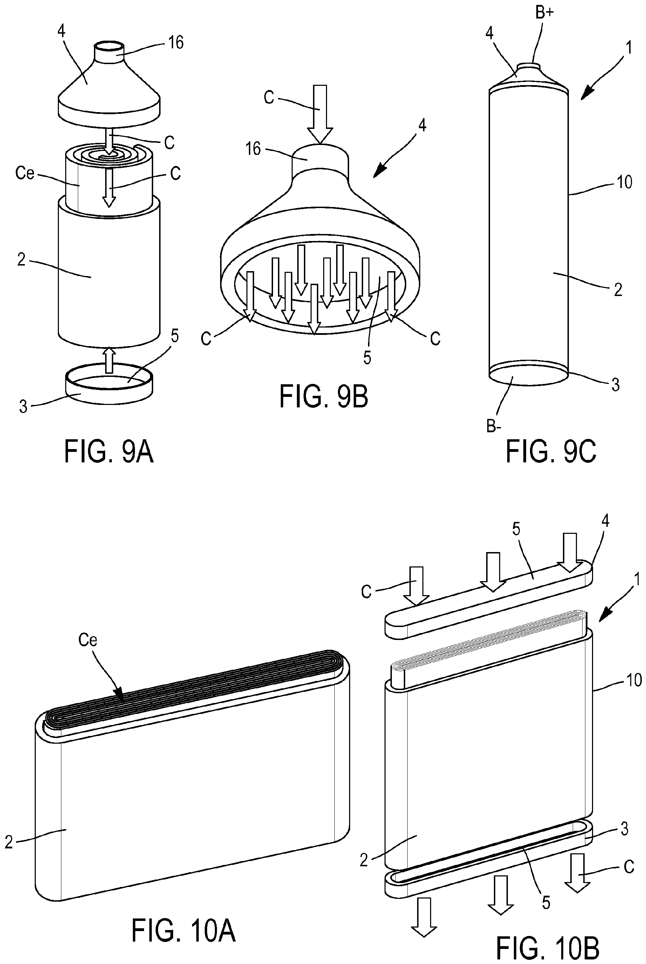

Comme indiqué précédemment en référence aux figures 1A et 1B, et comme représenté également sur les figures 9A, 9B et 9C, le boîtier 10 de la cellule 1 comporte trois parties, à savoir un tube 2 de section cylindrique et deux couvercles inférieur 3 et supérieur 4. Le boîtier 10 de la cellule 1 peut être souple ou rigide.

Dans le cas d'un boîtier 10 rigide, le tube 2 de section cylindrique peut avantageusement être réalisé dans un matériau isolant, rigide, léger et résistant, préférentiellement un polymère (par exemple PP, PPS, PVDF, PET, PMP, HDPE, PA 6-6, ABS). Dans les configurations décrites en référence aux figures 2A et 2B, le tube 2 de section cylindrique du boîtier 10 rigide peut présenter des moyens de séparation 9, 11a-11c ou 12 tels que décrits précédemment. Ces moyens de séparation 9, 11a-11c ou 12 peuvent être initialement disposés et fixés sur la couche extérieure de la dernière spire, de la même façon que pour toutes les autres spires, ou ils peuvent être fixés ou obtenus directement sur la partie interne 14 du boîtier 10. Ces moyens de séparation peuvent être par exemple des baguettes, des entretoises, des ergots longitudinaux, une plaque de diffusion de gaz souple ou encore une mousse poreuse souple.

Les figures 8A et 8B illustrent, en coupe, deux variantes de réalisation de moyens de séparation entre le coeur électrochimique Ce de la cellule 1 et le corps 2 du boîtier 10.

Sur la figure 8A, des entretoises 9 sont positionnées sur la partie interne 14 du tube 2 de section cylindrique du boîtier 10 de façon à former les espaces E de circulation du gaz.

Sur la figure 8B, des cannelures 15 sont formées sur la partie interne 14 du tube 2 de section cylindrique du boitier 10 de façon à créer des espaces E de circulation du gaz.

Par ailleurs, le diamètre interne du tube 2 de section cylindrique peut préférentiellement présenter un jeu suffisamment glissant pour pouvoir y insérer le coeur électrochimique Ce enroulé, ainsi que les moyens de séparation 9 avec le tube 2 du boîtier 10. Dans la configuration décrite en référence à la figure 2C, la spire externe du bobineau étant le collecteur de cuivre, il peut ne pas être nécessaire de rajouter des moyens de séparation avec le tube 2 de section cylindrique. Le diamètre interne de celui-ci peut préférentiellement présenter un jeu glissant suffisant pour pouvoir insérer aisément le coeur électrochimique Ce dans le tube 2 du boîtier 10.

En outre, dans le cas d'un boîtier 10 souple, le tube ou corps 2 de section cylindrique du boîtier 10 souple peut être obtenu dans un matériau très fin, notamment un film, la tenue mécanique du coeur électrochimique Ce étant alors considérée comme suffisante pour la cellule 1, ou plus épais tels que les matériaux actuellement utilisés pour les cellules souples en sachet du type « pouch-cell ». Avec ce type de boîtier 10 souple, une fois l'étape d'enroulement du coeur électrochimique Ce réalisée, il est possible de l'enrouler avec un ou plusieurs tours du film constituant le corps 2 du boîtier 10, afin de protéger suffisamment la cellule 1 (par exemple mécaniquement si besoin, isolation électrique, imperméabilité à l'eau, protection chimique, entre autres). Ensuite, on peut coller ou thermosceller, selon le matériau utilisé, le boîtier 10. De même que décrit précédemment, le boîtier 10 peut comporter sur sa surface interne 14 un espace E permettant la circulation du gaz sur la spire extérieure du coeur électrochimique Ce dans les configurations décrites en référence aux figures 2A et 2B. L'espace E est de même obtenu grâce à des moyens de séparation 9, 11a-11c ou 12 similaires à ceux décrits précédemment en référence aux figures 3A-3B, 4A-4C, 5 ou 8A. Toutefois, de part la souplesse du matériau employé, il peut ne pas être possible d'utiliser des cannelures 15, comme décrit en référence à la figure 8B.

Une fois le coeur électrochimique Ce disposé dans le tube 2 de section cylindrique, il est possible de mettre les couvercles supérieur 4 et inférieur 3 de part et d'autre du tube 2 de section cylindrique. Les couvercles supérieur 4 et inférieur 3 peuvent être obtenus par découpage et emboutissage de grille d'un matériau conducteur. Le procédé comporte alors l'étape de souder sur les couvercles 3 et 4 les fils de métal de chaque pôle en veillant à ce qu'ils obstruent le moins possible la circulation du gaz, les couvercles 3 et 4 constituant alors des bornes B+, B-, chaque borne étant ainsi située à chaque extrémité de la cellule 1. De façon préférentielle, les couvercles 3 et 4 peuvent avoir une surface plane circulaire, notamment de même diamètre que le diamètre extérieur du tube 2 de section cylindrique, cette surface plane étant par exemple une grille solide d'homogénéisation de flux obtenue dans un matériau conducteur. La grille peut avantageusement être préalablement mise en forme par des procédés de forgeage afin d'avoir une forme adéquate pour l'assemblage. Les couvercles 3 et 4 peuvent avantageusement posséder un joint assurant l'étanchéité au gaz afin d'éviter les fuites et d'optimiser sa circulation aux électrodes à gaz dans la cellule 1. Les couvercles 3 et 4 peuvent ensuite être fixés au corps 2 de section cylindrique, plusieurs solutions pour ce faire étant envisageables. Ainsi, ils peuvent être vissés au corps 2, après filetage des couvercles 3 et 4 et du corps 2 (quart de tour au maximum pour ne pas entortiller les fils reliant le coeur électrochimique Ce et les couvercles 3 et 4), déformés plastiquement (par exemple, sertissage), collés ou soudés s'ils sont réalisés dans un matériau soudable.

Par ailleurs, préférentiellement et pour une meilleure efficacité, le gaz peut circuler et arriver à la cellule 1 sous pression. Dans ce mode de réalisation, on peut ajouter au couvercle supérieur 4 un embout à gaz hermétique 16 afin d'adapter de manière optimale et hermétique le tuyau d'arrivée de gaz à la cellule 1.

On a représenté, en perspective, sur les figures 9A, 9B et 9C un exemple de cellule 1 comportant un couvercle supérieur 4 pourvu d'un embout à gaz hermétique 16. Plus précisément, la figure 9A représente, en configuration non assemblée, les couvercles supérieur 4 et inférieur 3, le coeur électrochimique Ce de la cellule 1 et le corps 2 de section cylindrique. La figure 9B représente le couvercle supérieur 4 de manière isolée, et la figure 9C représente la cellule 1 dans une configuration assemblée de son boîtier 10.

L'architecture du couvercle supérieur 4 est optimisée pour faciliter une arrivée du gaz (flèches C) répartie de manière uniforme vers le coeur électrochimique Ce. La grille d'homogénéisation de flux peut également compléter ce rôle. Ainsi, l'embout à gaz hermétique 16 pour l'arrivée du gaz par tuyau et la grille d'homogénéisation de gaz peuvent avoir des diamètres différents mais une section circulaire et peuvent être coaxiaux avec l'axe longitudinal du corps 2 de section cylindrique et du coeur électrochimique Ce. Il est également souhaitable de veiller à laisser accessible la borne du couvercle supérieur 4 afin de pouvoir la connecter électriquement.

Fabrication par bobinage prismatique

On décrit ci-après la réalisation d'une cellule électrochimique élémentaire 1 du type métal-gaz, de géométrie d'architecture prismatique avec un coeur électrochimique Ce bobiné.

On a ainsi représenté sur les figures 10A et 10B, en perspective et respectivement en vue partielle et non assemblée, un exemple d'une telle cellule 1 de géométrie prismatique avec un coeur électrochimique Ce bobiné, obtenue par le procédé selon l'invention.

Tout comme pour l'exemple décrit en référence aux figures 1A et 1B, la cellule 1 comporte un boîtier 10, formé lui-même par un corps ou tube 2 de section rectangulaire arrondie, un couvercle inférieur 3 et un couvercle supérieur 4, représentés de façon séparée sur la figure 10B. Chaque couvercle constitue une borne reliée à un pôle électrique du coeur électrochimique de la cellule 1. Par exemple, le couvercle inférieur 3 peut constituer une borne négative B- et le couvercle supérieur 4 peut constituer une borne positive B+.

Comme le représentent les flèches C sur la figure 10B, la circulation du gaz au sein de la cellule 1 se fait dans le sens longitudinal du coeur électrochimique Ce situé à l'intérieur de la cellule 1, en passant par les couvercles inférieur 3 et supérieur 4. A ce titre, les couvercles inférieur 3 et supérieur 4 peuvent comporter une ouverture 5 suffisante pour permettre la circulation du gaz.

Ainsi, selon la configuration des bornes B+, B- des cellules 1, il peut être possible d'empiler plusieurs cellules 1 et de les connecter en série, le gaz pouvant alors circuler en traversant les cellules 1, comme représenté sur la figure 10B. Avantageusement, la circulation du gaz peut se faire de manière dynamique de façon passive (par exemple par un vent de vitesse ou sous pression) ou active (par exemple par utilisation d'un gaz sous flux).

La présente invention pouvant avantageusement permettre d'adapter la technologie métal-gaz, et notamment Li-air, aux principes de fabrication des cellules électrochimiques élémentaires du type Li-ion déjà connues, il est ici considéré l'exemple d'une cellule électrochimique élémentaire 1 du type Li-air de dimensions identiques aux cellules électrochimiques prismatiques actuelles principalement présentes dans l'industrie. Aussi, les différentes étapes du procédé selon l'invention non développées ici peuvent avantageusement être rapprochées des procédés de réalisation des cellules Li-ion prismatiques bobinées déjà connues.

Pour la fabrication de la cellule 1 prismatique au coeur électrochimique Ce bobiné, le procédé est sensiblement équivalent à celui décrit précédemment pour une cellule 1 de géométrie cylindrique bobinée. Aussi, les exemples décrits en référence aux figures 2A-2C, 3A-3B, 4A-4C, 5, 6 , 7, 8A-8B et 9A-9C peuvent être transposés au cas d'une cellule 1 de géométrie prismatique en adaptant avantageusement les éléments décrits au fait que la cellule 1 est de géométrie prismatique et non cylindrique.

Toutefois, les couches superposées du coeur électrochimique Ce de la cellule 1 de géométrie prismatique présentent quelques différences avec celles du coeur électrochimique Ce d'une cellule 1 de géométrie cylindrique. En effet, la section du mandrin 13 n'est pas circulaire mais préférentiellement de forme rectangulaire arrondie. De plus, sur la couche continue du collecteur de courant 17 de l'électrode négative 6, à savoir le cuivre dans le cas d'une cellule 1 du type lithium-air, les autres couches successives ne sont pas disposées de manière continue, mais séquencée, constituant ainsi une succession de motifs de coeurs électrochimiques Ce' sur une bande entière de cuivre. On parle alors d'un bobinage en « motif » (ou « pattern » en anglais).

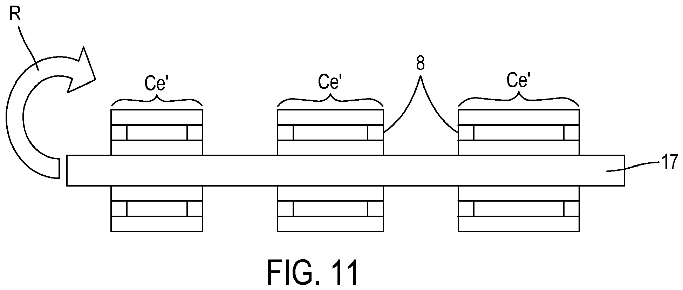

La figure 11 représente, en coupe, un exemple de cellule électrochimique 1 avant enroulement de géométrie prismatique, séquencée par la présence de plusieurs coeurs électrochimiques Ce' sur le collecteur de courant 17 (l'enroulement étant schématisé par la flèche R). De plus, sur la figure 11, la référence 8 représente les couches d'électrolyte sous la forme de joints d'électrolyte entre des couches d'électrode positive 7 ou négative 6.

Par ailleurs, les coeurs électrochimiques Ce', formant le coeur électrochimique global Ce de la cellule 1, peuvent avoir une longueur variable suivant les enroulements de l'ensemble. Ainsi, la première couche de coeur électrochimique peut avoir une longueur égale à celle du mandrin 13 sur lequel elle va s'enrouler, puis les couches suivantes peuvent avoir une longueur croissante afin de suivre la variation d'épaisseur du coeur électrochimique Ce en s'enroulant (on parle de bobinage en « motif séquencé »). Cette disposition peut s'adapter avantageusement quelle que soit la configuration choisie des couches, notamment quelle que soit celles décrites en référence aux figures 2A, 2B et 2C.

Pour calculer la longueur totale de chaque couche d'un coeur électrochimique Ce', on peut calculer la longueur de chaque demi-spire, et ajouter entre chaque demi-spire la longueur du coeur électrochimique. La longueur de la demi-spire sera alors celle de la partie comprenant uniquement le collecteur de courant 17. La longueur de la demi-spire peut être variable, en particulier croissante au fur et à mesure du nombre de spires enroulées autour du mandrin 13, selon un calcul semblable à celui décrit précédemment pour le cas d'une cellule 1 de géométrie cylindrique, en supposant leur rayon de courbure constant sur une spire. La longueur d'un coeur électrochimique Ce' peut également être variable, en particulier croissante au fur et à mesure du nombre de spires enroulées autour du mandrin 13, ou constante, ce qui peut simplifier les calculs mais augmente le poids du collecteur de courant 17 de cuivre. A la longueur de chaque demi-spire peut donc s'ajouter la longueur, constante ou non, de chaque coeur électrochimique Ce'.

Les différentes couches de collecteur de courant en cuivre peuvent préférentiellement être en contact à chaque spirale une fois repliées. Il est également souhaitable que les électrodes à gaz le soient, ce qui peut être fait par des fils (ou languettes) dépassant et soudées entre elles, en veillant à ce qu'ils n'obstruent pas la circulation du gaz dans la cellule 1 une fois enroulée.

Bien entendu, l'invention n'est pas limitée aux exemples de réalisation qui viennent d'être décrits. Diverses modifications peuvent y être apportées par l'homme du métier.

L'expression « comportant un » doit être comprise comme étant synonyme de « comportant au moins un », sauf si le contraire est spécifié.

## Revendications

1. Procédé de fabrication d'une cellule électrochimique élémentaire (1) à électrode à gaz du type lithium-air, aluminium-air ou zinc-air, de géométrie d'architecture cylindrique ou prismatique, destinée à être intégrée au sein d'un module électrochimique d'assemblage d'un système de stockage d'énergie, pourvue d'un coeur électrochimique (Ce) comportant au moins une électrode négative (6) et au moins une électrode positive (7), au moins une électrode négative (6) étant une électrode à gaz et au moins une électrode positive (7) étant une électrode métallique ou inversement, **caractérisé en ce qu'**il comporte l'étape consistant à réaliser le coeur électrochimique (Ce) de la cellule (1) par bobinage de plusieurs couches, dont au moins une couche d'électrode négative (6), une couche d'électrode positive (7) et une couche d'électrolyte (8), et à former des espaces (E) de circulation du gaz pour l'acheminement du gaz vers la ou les couches d'électrode à gaz (7) par des séparations (9, 11a-11c, 12, 15) générées entre les enroulements du coeur électrochimique (Ce) de la cellule (1),

le procédé comportant l'étape consistant à disposer, en surface d'une ou plusieurs couches d'électrode à gaz (7), des séparations sous la forme d'entretoises (9) espacées les unes des autres lors de l'enroulement des couches pour former le coeur électrochimique bobiné (Ce), pour former des espaces (E) de circulation du gaz.

2. Procédé selon la revendication 1, **caractérisé en ce que** le coeur électrochimique (Ce) est réalisé par superposition successive des couches suivantes :

   - une couche d'électrode négative (6) métallique, constituée notamment d'une feuille de cuivre et d'une feuille de lithium métal recouvert d'une membrane protectrice,
   - une couche d'électrolyte (8), constituée notamment d'une couche de séparateur imbibé d'électrolyte,
   - une couche d'électrode positive (7) à gaz, constituée notamment d'une grille de nickel recouverte d'une couche du type GDL favorisant la diffusion du gaz de manière homogène à la surface de l'électrode positive.

3. Procédé selon la revendication 1, **caractérisé en ce que** le coeur électrochimique (Ce) est réalisé par superposition successive de part et d'autre d'une couche d'électrode négative (6) métallique, constituée notamment d'une feuille de cuivre et d'une feuille de lithium métal recouvert d'une membrane protectrice, d'un ensemble formé par une couche d'électrolyte (8), constituée notamment d'une couche de séparateur imbibé d'électrolyte, et une couche d'électrode positive (7) à gaz, constituée notamment d'une grille de nickel recouverte d'une couche du type GDL favorisant la diffusion du gaz de manière homogène à la surface de l'électrode positive.

4. Procédé selon la revendication 1, **caractérisé en ce que** le coeur électrochimique (Ce) est réalisé par superposition successive de part et d'autre d'une couche d'électrode positive (7) à gaz, constituée notamment d'une grille de nickel recouverte d'une couche du type GDL favorisant la diffusion du gaz de manière homogène à la surface de l'électrode positive, d'un ensemble formé par une couche d'électrolyte (8), constituée notamment d'une couche de séparateur imbibé d'électrolyte, et une couche d'électrode négative (6) métallique, constituée notamment d'une feuille de cuivre et d'une feuille de lithium métal recouvert d'une membrane protectrice.

**5.** Procédé selon l'une des revendications précédentes, **caractérisé en ce qu'**il comporte l'étape consistant à disposer en outre, en surface d'une ou plusieurs couches d'électrode à gaz (7), des séparations sous la forme d'au moins une couche souple de diffusion du gaz (11a, 11b, 11c) pour former des espaces (E) de circulation du gaz, ladite au moins une couche souple de diffusion du gaz étant notamment une mousse souple poreuse (11c) ou une plaque souple de diffusion du gaz (11a, 11b), notamment une plaque monopolaire (11a) ou une plaque bipolaire (11b).

**6.** Procédé selon l'une quelconque des revendications précédentes, **caractérisé en ce qu'**il comporte l'étape consistant à disposer des fils, notamment de métal, conducteurs en surface de chacune des couches d'électrode positive (7) et négative (6), et à les relier entre eux, notamment par soudure.

**7.** Procédé selon l'une quelconque des revendications précédentes, **caractérisé en ce que** la cellule (1) est de géométrie d'architecture prismatique, et **en ce qu'**elle est séquencée par la présence d'un coeur électrochimique (Ce) formé par une succession de motifs de coeurs électrochimiques (Ce') répartis sur une bande de collecteur de courant (17).

**8.** Cellule électrochimique élémentaire (1) à électrode à gaz du type lithium-air, aluminium-air ou zinc-air, destinée à être intégrée au sein d'un module électrochimique d'assemblage d'un système de stockage d'énergie, **caractérisée en ce qu'**elle est obtenue par la mise en oeuvre du procédé de fabrication selon l'une quelconque des revendications précédentes.

**9.** Cellule selon la revendication 8, **caractérisée en ce qu'**elle est de géométrie d'architecture cylindrique ou prismatique, comportant un coeur électrochimique (Ce) bobiné et **en ce qu'**elle comporte un boîtier (10), comportant un tube (2) de section cylindrique ou prismatique, un couvercle inférieur (3) et un couvercle supérieur (4), chaque couvercle (3, 4) constituant une borne (B+, B-) reliée à un pôle électrique du coeur électrochimique (Ce) de la cellule (1), les couvercles inférieur (3) et supérieur (4) comportant notamment une ouverture (5) pour permettre la circulation du gaz, la cellule (1) comportant notamment des moyens de séparation (9, 15) entre la partie interne (14) du tube (2) du boîtier (10) et le coeur électrochimique (Ce) de la cellule (1) pour former des espaces (E) de circulation du gaz.

**Patentansprüche**

**1.** Verfahren zur Herstellung einer elektrochemischen Elementarzelle (1) mit Gaselektrode vom Typ Lithium-Luft, Aluminium-Luft oder Zink-Luft mit einer zylindrischen oder prismatischen Architekturgeometrie, die dazu ausgelegt ist, innerhalb eines elektrochemischen Moduls zum Zusammenbau eines Energiespeichersystems integriert zu sein, und die mit einem elektrochemischen Kern (Ce) versehen ist, der wenigstens eine negative Elektrode (6) und wenigstens eine positive Elektrode (7) umfasst, wobei wenigstens eine negative Elektrode (6) eine Gaselektrode ist, und wenigstens eine positive Elektrode (7) eine metallische Elektrode ist, oder umgekehrt, **dadurch gekennzeichnet, dass** es einen Schritt umfasst, der darin besteht, den elektrochemischen Kern (Ce) der Zelle (1) durch Wickeln von mehreren Schichten zu realisieren, darunter wenigstens eine negative Elektrodenschicht (6), eine positive Elektrodenschicht (7) und eine Elektrolytschicht (8), und Zwischenräume (E) für die Gaszirkulation für die Führung des Gases zu der oder den Gaselektrodenschichten (7) mittels Separationen (9, 11a-11c, 12, 15) zu bilden, die zwischen den Wicklungen des elektrochemischen Kerns (Ce) der Zelle (1) erzeugt werden,
wobei das Verfahren den Schritt umfasst, der darin besteht, an der Oberfläche einer oder mehrerer Gaselektrodenschichten (7) Separationen in der Form von Abstandhaltern (9), die voneinander beabstandet sind, während des Wickelns der Schichten anzuordnen, um den gewickelten elektrochemischen Kern (Ce) zu bilden, um Zwischenräume (E) für die Gaszirkulation zu bilden.

**2.** Verfahren nach Anspruch 1, **dadurch gekennzeichnet, dass** der elektrochemische Kern (Ce) durch sukzessive Überlagerung der folgenden Schichten realisiert wird:

   - eine metallische negative Elektrodenschicht (6), gebildet insbesondere mit einer Lage aus Kupfer und einer Lage aus metallischen Lithium, bedeckt mit einer Schutzmembran,
   - eine Elektrolytschicht (8), gebildet insbesondere mit einer Separatorschicht, die mit dem Elektrolyt getränkt ist,
   - eine positive Gaselektrodenschicht (7), gebildet insbesondere mit einem Nickelgitter, bedeckt mit einer Schicht von Typ GDL, die die Diffusion des Gases in homogener Weise an der Oberfläche der positiven Elektrode begünstigt.

**3.** Verfahren nach Anspruch 1, **dadurch gekennzeichnet, dass** der elektrochemische Kern (Ce) durch sukzessive Überlagerung auf beiden Seiten einer metallischen negativen Elektrodenschicht (6) realisiert wird, gebildet insbesondere mit einer Lage aus Kupfer und einer Lage aus Lithiummetall, bedeckt mit einer Schutzmembran, mit einer Gesamtheit gebildet durch eine Elektrolytschicht (8) gebildet insbesondere mit einer Separatorschicht, die mit Elektrolyt getränkt ist, und einer positiven Gaselektrodenschicht (7), gebildet insbesondere mit einem Nickelgitter, bedeckt mit einer Schicht vom Typ GDL, die die Diffusion des Gases in homogener Weise auf der Oberfläche der positiven Elektrode begünstigt.

4. Verfahren nach Anspruch 1, **dadurch gekennzeichnet, dass** der elektrochemische Kern (Ce) durch sukzessive Überlagerung auf beiden Seiten einer positiven Gaselektrodenschicht (7) realisiert wird, gebildet insbesondere mit einem Nickelgitter, bedeckt mit einer Schicht vom Typ GDL, die die Diffusion des Gases in homogener Weise auf der Oberfläche der positiven Elektrode begünstigt, mit einer Gesamtheit, gebildet durch eine Elektrolytschicht (8), gebildet insbesondere mit einer Separatorschicht, die mit Elektrolyt getränkt ist, und einer metallischen negativen Elektrodenschicht (6), gebildet insbesondere mit einer Lage von Kupfer und einer Lage von Lithiummetall, bedeckt mit einer Schutzmembran.

5. Verfahren nach einem der vorhergehenden Ansprüche, **dadurch gekennzeichnet, dass** es den Schritt umfasst, der darin besteht, ferner an der Oberfläche von einer oder mehreren Gaselektrodenschichten (7) Separationen in Form von wenigstens einer flexiblen Gasdiffusionsschicht (11a, 11b, 11c) anzuordnen, um Zwischenräume (E) für die Gaszirkulation zu bilden, wobei die wenigstens eine flexible Gasdiffusionsschicht insbesondere ein poröser flexibler Schaum (11c) oder eine flexible Gasdiffusionsplatte (11a, 11b) ist, insbesondere eine monopolare Platte (11a) oder eine bipolare Platte (11b).

6. Verfahren nach einem der vorhergehenden Ansprüche, **dadurch gekennzeichnet, dass** es den Schritt umfasst, der darin besteht, leitende Drähte, insbesondere aus Metall, an der Oberfläche von jeder der positiven (7) und negativen (6) Elektrodenschichten anzuordnen, und sie miteinander zu verbinden, insbesondere durch Löten.

7. Verfahren nach einem der vorhergehenden Ansprüche, **dadurch gekennzeichnet, dass** die Zelle (1) eine prismatische Architekturgeometrie hat, und dass sie durch das Vorhandensein eines elektrochemischen Kerns (Ce) sequenziert ist, gebildet durch eine Abfolge von Motiven von elektrochemischen Kernen (Ce'), die auf einem Stromkollektorband (17) verteilt sind.

8. Elektrochemische Elementarzelle (1) mit Gaselektrode vom Typ Lithium-Luft, Aluminium-Luft oder Zink-Luft, die dazu ausgelegt ist, innerhalb eines elektrochemischen Moduls zum Zusammenbau eines Energiespeichersystems integriert zu sein, **dadurch gekennzeichnet, dass** sie durch die Durchführung des Herstellungsverfahrens nach einem der vorhergehenden Ansprüche erhalten ist.

9. Zelle nach Anspruch 8, **dadurch gekennzeichnet, dass** sie eine zylindrische oder prismatische Architekturgeometrie hat, umfassend einen gewickelten elektrochemischen Kern (Ce), und dass sie ein Gehäuse (10) umfasst, umfassend ein Rohr (2) mit zylindrischen oder prismatischen Querschnitt, einen unteren Deckel (3) und einen oberen Deckel (4), wobei jeder Deckel (3, 4) einen Anschluss (B+, B-) bildet, der mit einem elektrischen Pol des elektrochemischen Kerns (Ce) der Zelle (1) verbunden ist, wobei der untere (3) und der obere (4) Kern insbesondere eine Öffnung (5) umfassen, um die Zirkulation des Gases zu ermöglichen, wobei die Zelle (1) insbesondere Separationsmittel (9, 15) zwischen dem inneren Teil (14) des Rohrs (2) des Gehäuses (10) und dem elektrochemischen Kern (Ce) der Zelle (1) umfasst, um Zwischenräume (E) für die Gaszirkulation zu bilden.

## Claims

1. Method for manufacturing an elementary gas-electrode electrochemical cell (1) of the lithium-air, aluminium-air or zinc-air type, with cylindrical or prismatic architecture geometry, intended to be integrated in an electrochemical assembly module of an energy storage system, provided with an electrochemical core (Ce) comprising at least one negative electrode (6) and at least one positive electrode (7), at least one negative electrode (6) being a gas electrode and at least one positive electrode (7) being a metal electrode or vice-versa, **characterised in that** it comprises the step consisting of producing the electrochemical core (Ce) of the cell (1) by winding of a plurality of layers, including at least one negative electrode layer (6), a positive electrode layer (7) and a layer of electrolyte (8), and disposing separation means (9, 11a, 11b, 11c, 12, 15) between the windings of the layers of the electrochemical core (Ce) of the cell (1) so as to form gas circulation spaces (E) for conveying the gas to the gas-electrode layer or layers (7), said method comprising the step consisting of disposing, on the surface of one or more gas electrode layers (7), separation means in the form of struts (9) spaced apart from one another during the winding of the layers to form the wound electrochemical core (Ce), in order to form gas circulation spaces (E).

2. Method according to claim 1, **characterised in that** the electrochemical core (Ce) is produced by the successive superimposition of the following layers:

- a metal negative electrode layer (6), consisting in particular of a sheet of copper and a sheet of metal lithium covered with a protective membrane,
- a layer of electrolyte (8), consisting in particular of a layer of separator soaked in electrolyte,
- a positive gas electrode layer (7), consisting in particular of a grille of nickel covered with a layer of the GDL type promoting the diffusion of gas evenly on the surface of the positive electrode.

3. Method according to claim 1, **characterised in that** the electrochemical core (Ce) is produced by the successive superimposition, on either side of a metal negative electrode layer (6), consisting in particular of a sheet of copper and a sheet of metal lithium covered with a protective membrane, of an assembly formed by a layer of electrolyte (8), consisting in particular of a layer of separator soaked in electrolyte, and a positive gas electrode layer (7), consisting in particular of a nickel grille covered with a layer of the GDL type promoting the diffusion of the gas evenly on the surface of the positive electrode.

4. Method according to claim 1, **characterised in that** the electrochemical core (Ce) is produced by the successive superimposition, on either side of a positive gas electrode layer (7), consisting in particular of a nickel grille covered with a layer of the GDL type promoting the diffusion of gas evenly on the surface of the positive electrode, of an assembly formed by an electrolyte layer (8), consisting in particular of a layer of separator soaked in electrolyte, and a metal negative electrode layer (6), consisting in particular of a sheet of copper and a sheet of metal lithium covered with a protective membrane.

5. Method according to any preceding claim, **characterised in that** it comprises the step consisting of disposing, on the surface of one or more gas electrode layers (7), at least one flexible gas diffusion layer (11a, 11b, 11c) in order to form gas circulation spaces (E), said at least one flexible gas diffusion layer being in particular a porous flexible foam (11c) a flexible gas diffusion plate (11a, 11b), in particular a single-pole plate (11a) or a twin-pole plate (11b).

6. Method according to any preceding claim, **characterised in that** it comprises the step consisting of disposing conductive, in particular metal, wires on the surface of each of the positive (7) and negative (6) electrode layers, and connecting them together, in particular by welding.

7. Method according to any preceding claim, **characterised in that** the cell (1) has a prismatic architecture geometry, and **in that** it is sequenced by the presence of an electrochemical core (Ce) formed by a succession of patterns of electrochemical cores (Ce') distributed over a current collector strip (17).

8. Elementary gas-electrode electrochemical cell (1) of the lithium-air, aluminium-air or zinc-air type, intended to be integrated in an electrochemical assembly module of an energy storage system, **characterised in that** it is obtained by implementing the manufacturing method according to any of the preceding claims.

9. Cell according to claim 8, **characterised in that** it has a cylindrical or prismatic architecture geometry, comprising a wound electrochemical core (Ce) and **in that** it comprises a housing (10), comprising a tube (2) with a cylindrical or prismatic cross section, a bottom cover (3,) and a top cover (4), each cover (3, 4) constituting a terminal (B+, B-) connected to an electrical pole of the electrochemical core (Ce) of the cell (1), the bottom (3) and top (4) covers comprising an opening (5) for allowing gas to circulate, said cell comprising in particular means (9, 15) for separation between the internal part (14) of the tube (2) of the housing (10) and the electrochemical core (Ce) of the cell (1) in order to form gas circulation spaces (E).

FIG. 1A

FIG. 1B

FIG. 2A

FIG. 2B

FIG. 2C

FIG. 3A

FIG. 3B

FIG. 4A

| 11a,11c | E |
| 7 | |
| 8 | |
| 6 | |

FIG. 4B

| 11b,11c | E |
| 7 | |
| 8 | |
| 6 | |
| 8 | |
| 7 | |

FIG. 4C

| 6 | |
| 8 | |
| 7 | |
| 11a,11c | E |
| 7 | |
| 8 | |
| 6 | |

FIG. 5

FIG. 6

FIG. 7

FIG. 8A

FIG. 8B

FIG. 9A

FIG. 9B

FIG. 9C

FIG. 10A

FIG. 10B

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1650819 A1
- EP 1049189 A1
- EP 2378595 A2
- EP 0948072 A1
- US 8440356 B2
- US 6287721 B1
- US 20130000110 A1